Europäisches Patentamt

European Patent Office

Office européen des brevets

(11) Publication number : **0 519 629 A1**

(12) **EUROPEAN PATENT APPLICATION**

(21) Application number : **92305216.1**

(22) Date of filing : **08.06.92**

(51) Int. Cl.⁵ : **G11B 5/70,** G11B 7/24

(30) Priority : **11.06.91 GB 9112505**
**13.01.92 GB 9200634**

(43) Date of publication of application :
**23.12.92 Bulletin 92/52**

(84) Designated Contracting States :
**AT BE CH DE DK ES FR GB GR IT LI LU MC NL PT SE**

(71) Applicant : **IMPERIAL CHEMICAL INDUSTRIES PLC**
**Imperial Chemical House, Millbank**
**London SW1P 3JF (GB)**

(72) Inventor : **Adkins, Kelvin Patrick**
**Almesteda, Colchester Road**
**Elmstead Market, Essex CO7 7EE (GB)**

(74) Representative : **Rhind, John Lessels et al**
**ICI Group Patents Services Dept. Po Box 6**
**Shire Park Bessemer Road**
**Welwyn Garden City Herts, AL7 1HD (GB)**

(54) **Recording media.**

(57)  A recording medium, especially optical recording tape, has a coating providing a surface texture designed to impart suitable friction and handling characteristics. The texture is produced by coating the film substrate with a composition comprising a polymerisable component, preferably a metal (meth)acrylate, dissolved or dispersed in a volatile vehicle and drying the coating. Removal of the vehicle causes phase separation and/or retraction of the components to produce the surface texture.

Fig.1

EP 0 519 629 A1

This invention relates to recording media such as are used to record information in a form which enables it to be read back by means of a read device. Such media in general comprise a polymeric substrate having on one side thereof a layer of recording material which may take a variety of forms, including magnetic, magneto-optical or optical recording materials.

Recording media are usually provided with a backcoat, ie. on the opposite side of the substrate to the recording layer, in order to impart desired handling and frictional properties to that side of the substrate. Hitherto, the backcoat layer in general has comprised a layer of plastics material with an inorganic filler incorporated therein so that the filler particles impart a surface texture or roughness to that side of the substrate.

Particularly in the case of optical recording media, we have found conventional backcoats to be unsatisfactory. For example, with an optical recording medium in tape form including a protective overcoat layer overlying the recording layer, when the tape is wound on a spool, the backcoat layer contacts the overcoat layer. Fast access to data stored in the optical recording media requires the media to be wound and unwound at high speed. At the high tape winding speeds employed, we have experienced difficulties in securing suitable frictional characteristics with inorganic filler containing backcoats and, in addition, backcoats incorporating such fillers have been found to be unduly abrasive with the consequence that considerable wear of the overcoat can occur which leads to high bit error rates.

GB 2113117 discloses a slippery biaxially stretched polyester film having a coating which is a mixture of a metal (meth)acrylate having one (meth)acrylate function per organic moiety, and a polymeric film-forming material or monomer precursor. GB2113117 also discloses a process for the production of such films. This process involves coating a surface of a running polyester film before the completion of its crystalline orientation and heating the coating prior to completing the orientation of the film. However, the textured coating formed in such a process may be stretched in completing the orientation of the polyester film or may suffer from loss of adhesion to the substrate due to sheering effects between the coating and the substrate.

We have now devised a recording medium comprising a surface textured coating preferably having a plurality of components, which overcomes or substantially eliminates the aforementioned problems.

According to one aspect of the present invention there is provided a recording medium comprising a polymeric substrate, a recording layer on one side of the substrate and a surface textured backcoat layer on the opposite side of the substrate, the backcoat layer comprising a layer of cured material comprising at least one polymer wherein the surface texture is imparted primarily by the polymer or polymers per se and wherein the substrate is not oriented after the coating is formed.

Desirably, the substrate is oriented, either uniaxially or preferably biaxially, in which case, the surface texture is imparted to the recording medium after the substrate is oriented.

Where the context admits, the terms "polymerisation" and "polymer" as used herein include reference to homo- and co-polymerisation and to homo- and co-polymers respectively and the term monomer herein includes reference to oligomer.

Thus, in accordance with the invention, the surface texture is primarily imparted by the polymer(s) per se rather than by an inorganic filler. In this way, compared with conventionally used inorganic fillers, the peaks of the surface texture tend to be less angular, ie. the peaks tend to be relatively smooth and do not tend to present abrasion promoting discontinuities.

Recording media according to the first aspect of the invention are advantageous as the surface relief of the coating is not modified by orientation after it has been formed thus allowing a greater control over the surface relief in the formation of the coating. Furthermore, the adherance of the surface textured coating to the substrate is retained due to the absence of subsequent orientation of the substrate.

Orientation of the substrate following application of the surface textured coating may modify the said coating, particularly coatings having a low degree of cross-linking, by reducing its out-of-plane displacement, that is "flattening" the surface texture, and thus reducing the surface roughness of the medium.

Surface roughness is a desirable characteristic for recording media to possess as the handling properties of such media are important.

According to a second aspect of the invention, there is provided a recording medium comprising a polymeric substrate having a recording layer on one side of the substrate and a surface textured coating on the other side of the substrate, said coating comprising a cured material comprising at least one polymer wherein the surface texture is imparted primarily by the polymer or polymers per se and the medium has an average surface roughness (Ra) of at least 0.05 μm.

Media according to the second aspect of the invention have excellent handling, wear and winding characteristics.

Usually the surface texture will comprise peaks and troughs distributed substantially uniformly over the entirety of the layer of material. Typically the average roughness (Ra as measured using a Perthometer) is up to about 2 microns and more usually within the range 0.1 - 1.0 microns.

We have found that by employing a multifunctional (meth)acrylate (acrylate and/or methacrylate) ester polymer, a surface textured coating having improved durability, thermal stability, hardness and wear resistance may be secured.

According to a third aspect of the invention, there is provided a recording medium comprising a polymeric substrate having a recording layer on one side of the substrate and a surface textured coating on the other side of the substrate, said coating comprising a cured material comprising at least one multi-functional (meth)acrylate ester polymer wherein the surface texture is imparted primarily by the polymer or polymers per se.

By "multi-functional (meth)acrylate ester polymer" we mean a (meth)acrylate monomer which has more than one (meth)acrylate function per monomer and which has been polymerised to produce the polymer.

The (meth)acrylate ester polymer is, at least in part, cross-linked due to the multi-functionality of the monomer.

The improved hardness of the surface textured coating on media according to the third aspect of the invention is particularly beneficial for recording media which are in tape form as the coating is less susceptible to compression and deformation under the pressures encountered when the tape is wound on spools.

Suitably, the surface textured coating of a recording medium according to the third aspect of the invention comprises at least 1%, preferably 25 to 100% and especially 75 to 100% by weight of a multi-functional (meth)acrylate ester polymer based on the curable components in the coating.

Further, it is preferred that at least 10%, preferably 30 to 100% and especially 50 to 100% of the available (meth)acrylate double bonds present in the coating, that is any multi-functional (meth)acrylate ester and any other (meth)acrylate component, are converted to single bonds by curing the coating.

The degree of conversion is measured using the FTIR absorbance ratio by comparing the unsaturation peak at about $810cm^{-1}$ due to $=CH_2$ twisting with the internal reference peak at $1158cm^{-1}$ due to the C-O stretch of the (meth)acrylic group. The absorbance ratio $810cm^{-1}/1158cm^{-1}$ of the cured coating is compared with that of the uncured coating to determine the degree of conversion.

According to a fourth aspect of the invention there is provided a recording medium comprising a polymeric substrate, a recording layer on one side of the substrate and a backcoat layer on the opposite side of the substrate, the backcoat layer comprising a layer of cured material comprising at least one polymerised component and having a surface texture induced at least in part, preferably primarily as a result of evaporation of a volatile vehicle from a coating composition containing said vehicle and the unpolymerised component(s).

Usually, the surface texture will be provided substantially entirely in the manner referred to in said first, second, third and/or fourth aspect of the invention but, in some instances, the surface texture may involve a minor contribution from other sources. For example, as referred to more specifically hereinafter, the material may incorporate a nucleating agent the presence of which may contribute to the surface relief but only to a relatively insignificant extent.

According to a further aspect of the invention there is provided a method of making a recording medium comprising coating a polymeric substrate with a solution or dispersion of material in a volatile liquid vehicle, drying the coating to remove the volatile vehicle, the material comprising at least one polymerisable component such that the drying process is effective to impart a surface texture to the dried layer formed by the coating of material, and curing the dried layer.

By "surface textured" we mean surface effects on the surface layer of a cured coating on a film, wherein a major proportion, preferably substantially all, of the surface effects are formed by retraction of at least one component of the coating and/or, where the coating comprises at least two components, phase separation between at least two of the said components.

Said polymer or polymerisable component may comprise a metal (meth)acrylate and/or a monomer.

It is preferred that substantially no shrinkage of the coating as a result of a chemical process, for example polymerisation and cross-linking, occurs prior to the curing of the metal (meth)acrylate and/or monomer. If any such shrinkage of the coating occurs, it is preferred that it does not contribute substantially, in relation to the retraction and/or phase separation, to the surface effects of the coating.

Suitably, a major proportion, preferably substantially all of the surface effects of the coating are formed before the metal (meth)acrylate and/or monomer is cured.

By "monomer" is meant a true monomer and/or an oligomer/pre-polymer which can be UV, electron beam and/or thermally cured. The amount, structure, molecular weight and functionality of the monomer can influence the morphology and properties of the cured coating. The monomer can be selected to optimise the coating requirements for a particular application, such as surface roughness; optical properties, eg haze; mechanical properties, eg abrasion resistance; flexibility; adhesion; solvent/chemical resistance; and weatherability.

The monomer is suitably a UV-reactive species, and more preferably a compound having an acrylate functional group. Particularly suitable monomers include acrylate ester monomers, urethane acrylate oligomers and N-vinyl lactam monomers.

Preferred acrylate ester monomers include acrylate esters having a plurality of acrylate groups, with trimethylolpropane triacrylate (TMPTA), ethoxylated TMPTA (TMPTEOA), tripropylene glycol diacrylate (TPGDA), and dipentaerythritol monohydroxy pentaacrylate (DPEPA) being particularly preferred.

Preferred acrylate oligomers include polyester acrylates and epoxy acrylates, with oligomeric acrylate thioethers - for example TMPTA-[S-TMPTA]$_n$-S-TMPTA where n is 0 to 2 which is available from Röhm GmbH under the trade name PLEX 6696-0, and urethane acrylates, especially aliphatic urethane acrylate oligomers, being particularly preferred.

Preferred N-vinyl lactam monomers include N-vinyl pyrrolidone and N-vinyl caprolactam.

The monomer may also be a cationic cured epoxy compound - such as a cycloaliphatic di-epoxide, for example 3,4-epoxycyclohexylmethyl-3′,4′-epoxycyclohexane carboxylate available under the trade name DEGACURE K126 from Degussa. In this case it is desirable that a cationic photoinitiator, such as a triarylsulphonium salt, is present.

A blend of acrylate ester monomer and/or acrylate oligomer and/or N-vinyl lactam monomer may also be used as the monomer, particularly a blend of DPEPA and PLEX 6696-0. A N-vinyl lactam monomer, if present in the blend, may suitably comprise up to 40 % by weight and preferably no more than 30% by weight of the blend. If desired, a cationic cured epoxy compound may also be included in any blends of monomers.

As herein described and employed, the metal (meth)acrylate preferably comprises a multivalent metal ion, for example a transition metal ion such as zirconium, more preferably a divalent metal ion such as zinc, cobalt, nickel or copper. A metal acrylate is generally preferred to a metal methacrylate. A particularly preferred metal acrylate is zinc diacrylate.

The metal (meth)acrylate and/or monomer may conveniently be applied to the substrate in a coating medium comprising a solution or dispersion of the metal (meth)acrylate and/or monomer in a suitable volatile vehicle, particularly an organic solvent or dispersant medium. The volatile vehicle may then be removed, suitably by drying to evaporate the vehicle.

Suitable organic media include common solvents - for example acetone, tetrahydrofuran and preferably those which have a hydrogen bonding capability such as alcohols, particularly methanol.

Deposition of the metal (meth)acrylate and/or monomer solution or dispersion onto the polymeric substrate is effected by conventional film coating techniques - for example, by gravure roll coating, reverse roll coating, dip coating, bead coating, slot coating or electrostatic spray coating. The solution or dispersion is suitably applied in an amount such that the thickness of the applied layer when dried is of the order of 5 μm or less, more usually 0.5 to 4 μm.

The degree of surface texture obtained can be controlled by varying the rate of drying of the metal (meth)acrylate and/or monomer layer; for example rapid drying of, for example, zinc diacrylate (1 min at 100°C) can produce a regular microcrystalline structure imparting texture and light scattering to the coated film.

As mentioned previously, a nucleating agent may be present in the coating composition and serves to provide sites in the substantially un-cured coating at which the metal (meth)acrylate or monomer can crystallise. A suitable nucleating agent may already be present, for example, in the metal (meth)acrylate or the monomer; for instance, commercially available grades of zinc diacrylate which have been investigated have been found to contain small quantities of a material which is insoluble in a suitable coating solvent for example methanol. Preliminary analysis has indicated that this material is partially polymerised zinc diacrylate and/or zinc stearate. When solutions of commercially available zinc diacrylate, for example, technical grade zinc diacrylate available from Röhm, are prepared in methanol some (of the order of 0.1% by weight compared to the amount of zinc diacrylate) of the higher molecular weight material remains suspended in solution for several days as a colloidal dispersion.

The colloidal component aids formation of surface texture, remains stable in the coating solution and may be uniformly distributed in the coated layer after drying.

Where a separate nucleating agent is employed, it may comprise a conventional nucleating agent such as silica, preferably amorphous silica, or carbon black, both available from Degussa under the trade names AEROSIL TT600 and PRINTEX XE2 respectively.

Once the solvent has been removed from the metal (meth)acrylate and/or monomer layer, it is necessary to cure the layer in order to fix the surface texture produced during the solvent removal regime. Suitable curing methods include polymerisation of the metal (meth)acrylate, for example by electron beam curing; thermal curing, preferably using thermal initiators, especially thermal free radical initiators such as inorganic or organic peroxides, for example benzoyl peroxide, azo compounds, for example 2,2′- azobisisobutyronitrile; but photopolymerisation is preferred.

Photopolymerisation is suitably achieved by exposing the solvent-free metal (meth)acrylate layer to high intensity ultra-violet (UV) light, for example using a mercury arc lamp, preferably a medium pressure mercury arc lamp, providing UV light having a wavelength of about 240 to about 370 nm and preferably 260 to 370 nm. UV-curing can be performed in air, or if required, for example to increase the curing rate, in an inert atmosphere such as nitrogen.

Initiation of photopolymerisation may be effected in the presence of a photoinitiator, wide range of which are commercially available for use in a system comprising a metal (meth)acrylate and/or a monomer. The photoinitiator is preferably incorporated in an amount ranging from 0.1 to 20%, more preferably 2 to 12% by weight of the total reactive components. Suitable photoinitiators include benzoins, benzoin alkyl ethers, benzil ketals, acetophenone derivatives, for example dialkyl acetophenones and di-chloro and tri-chloro acetophenones, and particularly IRGACURE 651 and IRGACURE 907 both of which are available from Ciba Geigy.

The coating composition preferably comprises both the monomer and the metal (meth)acrylate.

It will be understood that the monomer will be able to cure in the presence of the metal (meth)acrylate. The amount, structure, molecular weight and functionality of the monomer can influence the morphology and properties of the cured coating. The monomer can be selected to optimise the coating requirements for a particular application, such as surface roughness; optical properties, eg haze; mechanical properties, eg abrasion resistance; flexibility; adhesion; solvent/chemical resistance; and weatherability.

The amount of monomer in the coating composition can vary over a wide range, preferably from 0 to 95%, more preferably 60 to 90 %, and particularly 66 to 85 % by weight of the total reactive components.

When the coating composition comprises a metal (meth)acrylate, particularly zinc diacrylate, and a monomer, the metal (meth)acrylate may separate out from the monomer to form a two-phase system, as the solvent is removed by for example drying. The morphology of the resulting surface coating is dependent on the ratio of the salt to the monomer can be described as a discontinuous metal (meth)acrylate phase or ionomeric phase embedded in a continuous polymeric phase. Depending upon the compatibility of the metal (meth)acrylate and the monomer, it is possible that some of the monomer may be incorporated in the ionomeric phase and/or that some of the metal (meth)acrylate may be incorporated in the polymeric phase.

The presence of a monomer in the coating formulation may result in an improvement in the durability of the resulting surface textured coating.

In order to secure phase separation, the coating composition may also comprise a polymer component, in addition to the monomer and/or the metal (meth)acrylate, which suitably is substantially incompatible with at least one other component of the composition and preferably all of the components of the composition.

Suitable polymer components include high molecular weight (eg. 1000 to 5000, more preferably 3000 to 4000) epoxy polymers such as bisphenol A epichlorohydrin condensates for example EPIKOTE 1009, an epoxy resin available from Shell and cellulosic polymers for example cellulose acetate.

The amount of polymer component in the coating composition may vary over a wide range and is determined by the application for which the medium is required. The polymer component may be present in an amount of up to 90 %, preferably 1 to 80 % and especially 20 to 60 % by weight of the total reactive components.

If desired, a supercoat may be applied to the surface textured coating of a medium according to the invention to provide protection therefor. In order to retain the benefit of the surface relief of the surface textured coating it is highly desirable that the supercoat follows the contours of the surface relief and is applied in a layer of substantially uniform thickness.

We have found that a supercoat having a low surface energy, preferably not more than 44 dyne/cm, more preferably not more than 36 dyne/cm and especially in the range 16 to 36 dyne/cm, is particularly advantageous. Such supercoats reduce the affinity between the supercoat of the recording medium and the opposite surface thereof.

Suitably the low surface energy supercoat comprises a hydrocarbon wax, a silicone polymer/prepolymer, desirably silicone (meth)acrylates - for example Ebecryl 1360 available from Union Carbide, and/or fluorinated polymers/prepolymers - for example 2,2,3,3 tetrafluoropropylmethacrylate available from Rohm GmbH.

The thickness of the supercoat will depend upon the application for which the medium is produced but is preferably in the range 1nm to 2μm and especially 1nm to 0.5μm.

Prior to deposition of the surface textured coating medium onto the polymeric substrate the exposed surface thereof may be subjected to a surface-modifying treatment to provide a receptive layer thereon. The treatment may be chemical or physical, a convenient treatment, because of its simplicity and effectiveness, which is particularly suitable for the treatment of a polyolefin substrate, being to subject the exposed surface of the substrate to a high voltage electrical stress accompanied by corona discharge. Alternatively, the receptive layer may be created by pretreating the substrate with a medium known in the art to have a solvent or swelling action on the substrate polymer. Examples of such media, which are particularly suitable for the treatment of a polyester substrate, include a halogenated phenol dissolved in a common organic solvent, for example a solution of p-chloro-m-cresol, 2,4-dichlorophenol, 2,4,5- or 2,4,6- trichlorophenol or 4-chlororesorcinol in acetone or methanol. In addition, and preferably, the treatment solution may contain a partially hydrolysed vinyl chloride-vinyl acetate copolymer. Such a copolymer conveniently contains from 60 to 98 per cent of vinyl chloride, and from 0.5 to 3% of hydroxyl units, by weight of the copolymer. The molecular weight (number average) of the copolymer is conveniently in a range of from 10,000 to 30,000 and preferably from 16,500 to 25,000.

A suitable receptive layer is formed by coating the polymeric substrate with a coating composition comprising an acrylic or methacrylic polymer, preferably comprising at least one monomer derived from an ester of acrylic acid, especially an alkyl ester where the alkyl group contains up to ten carbon atoms such as methyl, ethyl, n-propyl, isopropyl, n-butyl, isobutyl, terbutyl, hexyl, 2-ethylhexyl, heptyl, and n-octyl, Polymers derived from an alkyl acrylate, for example ethyl acrylate and butyl acrylate, together with an alkyl methacrylate are preferred. Polymers comprising ethyl acrylate and methyl methacrylate are particularly preferred. The acrylate monomer may be present in a proportion in the range 30 to 65 mole %, and the methacrylate monomer may be present in a proportion in the range of 20 to 60 mole %.

Other monomers which are suitable for use in the preparation of the acrylic or methacrylic polymer, which may be used instead of, but are preferably copolymerised as optional additional monomers together with esters of acrylic acid and/or methacrylic acid, and derivatives thereof, include acrylonitrile, methacrylonitrile, halo-substituted acrylonitrile, halo-substituted methacrylonitrile, acrylamide, methacrylamide, N-methylol acrylamide, N-ethanol acrylamide, N- propanol acrylamide, N-methacrylamide, N-ethanol methacrylamide, N-methyl acrylamide, N-tertiary butyl acrylamide, hydroxyethyl methacrylate, glycidyl acrylate, glycidyl methacrylate, dimethylamino ethyl methacrylate, itaconic acid, itaconic anhydride and half esters of itaconic acid.

Other optional monomers include vinyl esters such as vinyl acetate, vinyl chloracetate and vinyl benzoate, vinyl pyridine, vinyl chloride, vinylidene chloride, maleic acid, maleic anhydride, styrene and derivatives of styrene such as chloro styrene, hydroxy styrene and alkylated styrenes, wherein the alkyl group contains from one to ten carbon atoms.

A preferred acrylic or methacrylic polymer derived from 3 monomers comprises 35 to 60 mole % of ethyl acrylate: 30 to 55 mole % of methyl methacrylate: 2-20 mole % of methacrylamide, and particularly in a ratio of 46/46/8 mole % respectively.

The molecular weight of a suitable acrylic or methacrylic polymeric component can vary over a wide range but the weight average molecular weight is preferably within the range 40,000 to 300,000, and more preferably within the range 50,000 to 200,000.

Another suitable receptive layer is formed by coating the polymeric substrate with a mixture of the aforementioned acrylic or methacrylic polymer and a styrene/butadiene copolymer. A preferred styrene/butadiene copolymer has a molar ratio of styrene:butadiene of approximately 1.4:1.0. A preferred acrylic or methacrylic polymer for mixing with the styrene/butadiene copolymer comprises methyl methacrylate/ethyl acrylate/methacrylamide, preferably in a ratio of 46/46/8 mole % respectively. The weight ratio of the styrene/butadiene copolymer to acrylic or methacrylic polymer can vary over a wide range, preferably from 1.0:0.1 to 10.0, more preferably from 1.0:0.25 to 4.0, and particularly 1.0:1.0.

A preferred receptive layer has a low surface energy which facilitates retraction of the surface textured coating composition to form the surface textured coating. Such a receptive layer suitably comprises any of the materials which may be employed in a low surface energy supercoat as herein described. Desirably such a receptive layer may chemically react with the surface textured coating to promote adhesion between the receptive layer and the surface textured coating and preferably comprises (meth)acrylate double bonds which react with (meth)acrylate groups in the surface textured coating for example when the said coating is cured.

If desired, a plurality of treatments may be sequentially applied to a substrate.

The treatment is suitably applied at a concentration or intensity which will yield a receptive layer having a dry thickness generally less than 1 μm, and preferably from 0.05 to 0.5 μm.

A polyester substrate, for example a polyethylene terephthalate film, may require one or more of the aforementioned surface treatments in order to obtain adequate adhesion of the surface textured layer to the substrate.

The substrate of a recording medium according to the invention may be formed from any synthetic, film-forming polymeric material. Suitable thermoplastics materials include a homopolymer or copolymer of a 1-olefin, such as ethylene, propylene and but-1-ene, a polyamide, a polycarbonate, and, particularly, a synthetic linear polyester which may be obtained by condensing one or more dicarboxylic acids or their lower alkyl (up to 6 carbon atoms) diesters, eg terephthalic acid, isophthalic acid, phthalic acid, 2,5- 2,6- or 2,7- naphthalenedicarboxylic acid, succinic acid, sebacic acid, adipic acid, azelaic acid, 4,4'-diphenyldicarboxylic acid, hexahydroterephthalic acid or 1,2-bis-p-carboxyphenoxyethane (optionally with a monocarboxylic acid, such as pivalic acid) with one or more glycols, particularly aliphatic glycols, eg ethylene glycol, 1,3- propanediol, 1,4- butanediol, neopentyl glycol and 1,4-cyclohexanedimethanol. A polyethylene naphthalate, and particularly a polyethylene terephthalate film is preferred, especially such a film which has been biaxially oriented by sequential stretching in two mutually perpendicular directions, typically at a temperature in the range 70 to 125°C, and preferably heat set, typically at a temperature in the range 150 to 250°C, for example - as described in British Patent GB-A-838708.

The substrate may also comprise a polyarylether or thio analogue thereof, particularly a polyaryletherketone, polyarylethersulphone, polyaryletheretherketone, polyaryletherethersulphone, or a copolymer or thioanalogue thereof. Examples of these polymers are disclosed in EP-A-1879, EP-A-184458 and US-A-4008203, particularly suitable materials being those sold by ICI PLC under the Registered Trade Mark STABAR. Blends of these polymers may also be employed.

Suitable thermoset resin substrate materials include addition - polymerisation resins - such as acrylics, vinyls, bis-maleimides and unsaturated polyesters, formaldehyde condensate resins - such as condensates with urea, melamine or phenols, cyanate resins, isocyanate resins, epoxy resins, functionalised polyesters, polyamides or polyimides.

A polymeric film substrate for production of a recording medium according to the invention may be unoriented, or uniaxially oriented, but is preferably biaxially oriented. A thermoplastics polymeric substrate is conveniently biaxially oriented by drawing in two mutually perpendicular directions in the plane of the film to achieve a satisfactory combination of mechanical and physical properties. Simultaneous biaxial orientation may be effected by extruding a thermoplastics polymeric tube which is subsequently quenched, reheated and then expanded by internal gas pressure to induce transverse orientation, and withdrawn at a rate which will induce longitudinal orientation. Sequential stretching may be effected in a stenter process by extruding the thermoplastics substrate material as a flat extrudate which is subsequently stretched first in one direction and then in the other mutually perpendicular direction. Generally, it is preferred to stretch firstly in the longitudinal direction, ie the forward direction through the film stretching machine, and then in the transverse direction. A stretched substrate film may be, and preferably is, dimensionally stabilised by heat-setting under dimensional restraint at a temperature above the glass transition temperature thereof.

The surface textured coating medium is suitably applied to a receptive surface of an already oriented, and preferably heat-set, film substrate.

The thickness of the substrate of a recording medium according to the invention may vary over a wide range, but generally will be up to 300, especially from 2 to 75 μm. The thicknesses of the respective layers deposited on the substrate are usually minor by comparison therewith. A medium according to the invention may therefore be expected to exhibit a total thickness of from about 5 to 310 μm, especially 10 to 260 μm.

A surface textured layer may be applied to one or each side of the recording medium.

One or more of the polymeric layers of a medium according to the invention may conveniently contain any of the additives conventionally employed in the manufacture of thermoplastics polymeric films. Thus, agents such as anti-static agents, dyes, pigments, voiding agents, lubricants, anti-oxidants, anti-blocking agents, surface active agents, slip aids, gloss-improvers, prodegradants, ultra-violet light stabilisers, viscosity modifiers and dispersion stabilisers may be incorporated in the substrate and/or receptive layer(s) and/or surface textured layer(s), as appropriate.

The invention is illustrated by reference to the accompanying drawings in which:

Figure 1 is a diagrammatic sectional view through an optical recording medium having a backcoat applied thereto; and

Figure 2 is a graph illustrating the variation of BER with tape winding cycles for an optical tape having a backcoat in accordance with the invention and for a optical tape having a backcoat incorporating an inorganic filler.

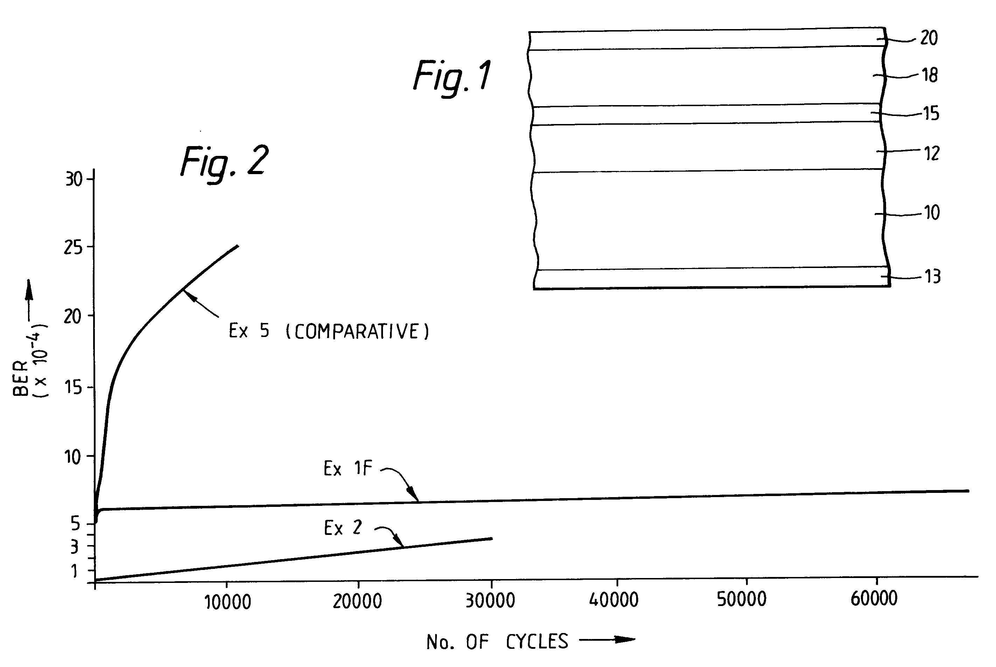

Referring to Figure 1, the optical recording medium illustrated is in a form suitable for use as a flexible optical tape. However, it will be appreciated that the present invention is not limited to media of the optical tape type. The medium comprises a flexible substrate 10 which is coated on one face with a subbing or smoothing layer 12. The reverse face of the substrate is coated with a backcoat 13 which conventionally incorporates inorganic filler particles so as to impart a surface roughness to the reverse side of the substrate in order to control the frictional and handling properties of the medium. A thin layer 15 of material, eg. a suitable metal, is applied to the smooth surface of the subbing layer 12 to provide a surface which is highly reflective with respect to the wavelength used for writing into and reading from the medium. An amorphous recording layer 18 of a dye combined with a thermoplastic binder is solvent coated over the reflecting layer 15. A number of suitable dyes for use in the recording layer 18 are disclosed in our prior US Patent No. 4606859. The binder is typically an amorphous polyester thermoplastic resin.

An overcoat layer 20 is superimposed on the recording layer 18, the overcoat layer being of a material which is highly transmissive to the laser radiation used for writing and reading the medium and which will be compatible with the reverse surface of the substrate in terms of frictional and handling properties and may also serve to protect the recording layer from the environment and from damage by for example abrasion. The substrate 10 may comprise for example a 75 micron or less thick film of Melinex which is a biaxially orientated polyethylene teraphthalate film (Melinex is a Registered Trade Mark of Imperial Chemical Industries PLC) and has sufficient flexibility to function, when coated with the layers 12, 15, 18 and 20, as a flexible optical tape medium which may be wound up on a spool in a similar manner to magnetic tape media. The dye is selected so as to have an absorption peak slightly shifted away from the reading and writing wavelength, typically 830 nm. The overcoat layer is typically composed of tough and hard material such as a radiation cured urethane acrylate or epoxy acrylate.

The recording medium shown in Figure 1 is intended to be written into and read back using conventional techniques involving moving the medium relative to an optical recording head operable in writing or reading modes using a laser beam adjusted to higher or lower power levels according to the mode of operation, recording being effected with increased power and read back with reduced power. The laser beam is focused onto the recording layer 18 through the overcoat layer 20. Information may be represented digitally by using pit length (ie. the length of the pit in the direction of relative movement between the recording head and the medium) or pit position to store binary information and the information is read back by applying threshold techniques to detect the reflectivity variations caused by the presence of the pits. In accordance with the present invention, the roughness characteristics required of the backcoat are not afforded by the inclusion of an inorganic filler incorporated in the backcoat composition; instead the required roughness is imparted at least primarily by the morphology of the polymer(s) forming the backcoat.

The invention is further illustrated by the following Examples.

Example 1

A polyethylene terephthalate film was melt extruded, cast onto a cooled rotating drum and stretched in the direction of extrusion to approximately 3 times its original dimensions. The cooled stretched film was then coated on both surfaces with an aqueous receptive layer composition containing the following ingredients:

```
        Acrylic resin                          3.125 litres
             (16% w/w aqueous based latex of methyl
        methacrylate/ethyl acrylate/methacrylamide :
        46/46/8 mole %, with 25% by weight
        methoxylated melamine-formaldehyde)


    Ludox TM                              0.43 litres
         (50% w/w aqueous silica slurry of average
    particle size approximately 20 nm,
    supplied by Du Pont)


    Ammonium nitrate                      0.20 litres
         (10% w/w aqueous solution)


    Synperonic N                          0.50 litres
         (27% w/w aqueous solution of a nonyl
    phenol ethoxylate, supplied by ICI)


    Demineralised water              to 100 litres
```

the pH of the mixture being adjusted to 9.0 with dimethylamino ethanol (prior to the addition of the Ludox TM).

The receptive layer coated film was passed into a stenter oven, where the film was dried and stretched in the sideways direction to approximately 3 times its original dimensions. The biaxially stretched coated film was heat set at a temperature of about 200°C by conventional means. Final film thickness was 75 μm, with a dry

coat weight of approximately 0.3 mgdm$^{-2}$.

The textured surface backcoat layer was derived from coating compositions 1A to 1G as indicated below and was applied to the receptive layer by "bead" (meniscus) coating.

| | Composition (% w/w) | | | | | | | | |
|---|---|---|---|---|---|---|---|---|---|
| | 1A | 1B | 1C | 1D | 1E | 1F | 1G | 1H | 1J |
| Zinc diacrylate | 0.56 | 1.4 | 2.23 | 3.07 | 3.90 | 1.50 | 3.0 | 1.35 | 1.35 |
| Plex 6696-0 | - | - | - | - | - | 4.25 | 8.5 | 3.8 | 3.8 |
| Sartomer 399 | 1.3 | 3.26 | 5.21 | 7.16 | 9.12 | 4.25 | 8.5 | 3.8 | 3.8 |
| Irgacure 907 | 0.14 | 0.35 | 0.56 | 0.77 | 0.98 | 0.70 | 1.4 | 0.65 | 0.65 |
| Methanol | 98.0 | 95.0 | 92.0 | 89.0 | 86.0 | 89.3 | 78.6 | 45.2 | 18.1 |
| Tetrahydrofuran | - | - | - | - | - | - | - | 45.2 | - |
| Acetone | - | - | - | - | - | - | - | - | 72.3 |
| Total % w/w solids | 2.0 | 5.0 | 8.0 | 11.0 | 14.0 | 10.7 | 21.4 | 9.6 | 9.6 |

Zinc diacrylate supplied by Röhm; Plex 6690-6 is an oligomeric acrylate thioether supplied by Röhm; Sartomer 399 is a dipentaerythritol monohydroxy pentaacrylate supplied by Sartomer; Irgacure 907 is 2-methyl-1-((4-methylthio)phenyl)-2-morpholino-propanone-1 supplied by Ciba Geigy.

The applied wet coating was approximately 12 μm thick and was dried in an oven at 100°C for a period up to 20 seconds (1A to 1G) and at 125°C for 10 seconds and 20 seconds for 1H and 1J respectively depending on the line speed.

The dried coating was cured by one pass of the film at 24 metres per minute (mpm) for Examples 1A to 1E, 30 mpm for Example 1F and 1H, 20 mpm for Example 1G and 15 mpm for Example 1J under a pair of focused 118 W/cm (300 W/inch) UV lamps (microwave generated type H bulb Fusion Systems) in a nitrogen purged atmosphere.

Films 1C, 1F and 1G were thereafter coated on the opposite side of the substrate to the backcoat with identical layers comprising a reflective layer, a dye/polymer layer and an overcoat layer derived from the a 3.75%w/v solution of the overcoat reactive components in the solvent system (providing an overcoat thickness of 220nm) to form an optical recording element having the structure described in Figure 1 but excluding the subbing layer.

Overcoat Reactive Components

Ebecryl 220                                                                          64.5%w/w

(hexafunctional aromatic urethane acrylate available from UCB)


Ebecryl 210                                                                          21.5%w/w

(difunctional aromatic urethane acrylate available from UCB)


Ebecryl 1360 (silicone acrylate available from UCB)                                  3.8%w/w


Uvecryl P115 (amino acrylate available from UCB)                                     3.4%w/w


Irgacure 907                                                                         6.8%w/w

(2-methyl-1-[4-(methylthio)-phenyl]-2-morpholino propanone-1

available from Ciba Geigy)


Solvent system


Industrial methylated spirits                                                        75%v/v


Acetone                                                                              20%v/v


Diacetone                                                                            5%v/v


The coating properties of the cured films were assessed and the results are given in Table 1. Surface roughness was measured using a Perthometer S6P surface measuring and recording instrument having a "free tracing system" and a datum pick-up No FTK 3-50 to measure the average roughness (Ra) and the average groove distance (Rsm) on the film under test.

TABLE 1

|          | 1A   | 1B   | 1C   | 1D   | 1E   | 1F   | 1G   | 1H    | 1J    |
|----------|------|------|------|------|------|------|------|-------|-------|
| $R_a$    | 0.13 | 0.30 | 0.45 | 0.59 | 0.83 | 0.46 | 0.51 | 0.48  | 0.30  |
| $R_{sm}$ | 64   | 81   | 99   | 127  | 166  | 208  | 250  | 154   | 133   |
| $f_{stat}$ | 0.96 | 0.61 | 0.87 | 0.81 | 0.95 | 0.23 | 0.23 | >0.85 | >0.85 |
| $f_{dyn}$ | 0.18 | 0.13 | 0.15 | 0.16 | 0.19 | 0.23 | 0.23 | -     | -     |

$f_{stat}$ and $f_{dyn}$ respectively represent the static and dynamic coefficients of surface friction. Surface friction was determined using a Lloyd JJ T5K "Tensile Tester" available from Instron Ltd. A sample of the film was laid on the base plate of the instrument with the surface textured coating face down and a second sample of the film was secured, with surface textured coating facing down, to a block weighing 5.88N. The block was placed on the first-mentioned sample. A wire was attached to the block and the Tensile Tester was operated at a cross-head speed of 50mm/minute. The force on the wire required to move the block with the samples in contact was measured by the load cell to give a static and a dynamic friction reading. The samples of film to be tested were allowed to equilibrate for one hour at a temperature of 20°C and 60% Relative Humidity. In the case of Examples 1A, 1B, 1D and 1E, because these were not dye coated and overcoated, a sample of film 1C was laid on the base plate and samples of film 1A, B, D or E were secured to the block.

Examples 1A, 1B, 1C, 1D, 1E, 1F and 1G illustrate that substantially similar dynamic friction characteristics may be secured with films having a wide variety of solids content. Examples 1 H and 1J illustrate that similar surface roughness characteristics may be obtained when a particular coating is applied from a variety of solvent systems.

A further sample of film 1F was prepared, and was coded as 1F(thin). Film 1F(thin) was prepared by the same procedure as films 1A to 1G except that a much thinner overcoat of the same formulation as that applied to 1C, 1F and 1G was applied. Film 1F(thin) exhibited surface roughness values of 0.43 ($R_a$) and 190 ($R_{sm}$) and friction coefficients of 2.45 ($f_{stat}$) and 2.15 ($f_{dyn}$).

## Example 2

The procedure of Example 1 was repeated, with identical substrate and receptive layers, but the textured surface layer was derived from a coating composition comprising:

```
Sartomer SR368                                          1.0% w/w

(tris(2-hydroxyethyl) isocyanurate triacrylate

supplied by Cray Valley Products)


Irgacure 907                                            0.7% w/w


Methanol                                                98.9% w/w
```

The applied wet coating was dried in an oven at 125°C for 10 seconds to provide a dry coat weight of approximately 110mg/m². The dried coating was cured by one pass of the film at 30 mpm under two focused 300 W/inch (118 W/cm) medium pressure mercury arc lamps (Fusion systems type H) in nitrogen. The cured coat thickness was approximately 0.7 μm.

The film was treated on the uncoated side to by providing a subbing layer to render the substrate optically smooth, the subbing layer was then sputter coated with an aluminium alloy to form a reflective surface. This surface was then coated with a dye/binder sensitive layer and then a sub-micron transparent protective overcoat layer.

The protective overcoat layer was derived from the overcoat composition of Example 1 except that the composition comprised a 0.40%w/v solution of the reactive components in the solvent system to provide an overcoat of 30nm thickness.

The cured film displayed surface texture and is suitable for use as a durable low-friction backcoat for flexible data storage media.

The coating properties of the cured film were assessed and the surface roughness was as follows; Ra 0.07 and Rsm <36.

## Example 3

The procedure of Example 1 was repeated with the substrate and receptive layers providing a film thickness of 75 μm, with a dry coat weight of approximately 1200 mgm⁻², but the textured surface layer was derived from coating compositions 3A to 3C as indicated below and was applied to the receptive layer by "bead" (meniscus) coating;

| Composition($\%w/w$) | | | |
|---|---|---|---|
| | 3A | 3B | 3C |
| Chromium triacrylate | 0.30 | - | - |
| Zirconium tetraacrylate | - | 0.45 | - |
| Lead(II) diacrylate | - | - | 0.75 |
| Sartomer 399 | 3.8 | 3.8 | 3.8 |
| Plex 6696-0 | 3.8 | 3.8 | 3.8 |
| Irgacure 907 | 0.63 | 0.63 | 0.63 |
| Methanol | 91.47 | 91.32 | 91.02 |
| Total $\%$ w/w solids | 8.53 | 8.68 | 8.98 |

Two films for each of coatings 3A, 3B and 3C were produced and differed only in the time of drying of the coating (air impingement) and in the UV curing line speed (using a pair of focused 118 W/cm (300 W/inch) UV lamps (microwave generated type H bulb Fusion Systems) in a nitrogen purged atmosphere) as listed below;

| | 3A | 3A' | 3B | 3B' | 3C | 3C' |
|---|---|---|---|---|---|---|
| Drying Time (seconds) | 30 | 20 | 60 | 30 | 60 | 10 |
| UV cure (line speed) | 10 | 15 | 5 | 10 | 5 | 30 |

All of the films in this Example were treated on the uncoated side of the film to provide a coating identical to that applied to the substrate on the opposite side to the surface textured coating as described in Example 2. The coating properties of the cured films were assessed and are shown in Table 2.

TABLE 2

| Example | %w/w Solid | Surface Roughness | | Friction Coefficient |
|---|---|---|---|---|
| | | Ra | Rsm | Static |
| 3A | 8.53 | 0.13 | 84 | 0.64 |
| 3A' | 8.53 | 0.13 | 119 | 0.56 |
| 3B | 8.68 | 0.14 | 52 | >0.85 |
| 3B' | 8.68 | 0.10 | 70 | >0.85 |
| 3C | 8.98 | 0.27 | 9 | >0.85 |
| 3C' | 8.98 | 0.26 | 123 | 0.54 |

Examples 3A to 3C′ illustrate that a variety of metal acrylates provide a desirable combination of surface roughness (Ra) and static friction.

Example 4

The procedure of Example 1 was repeated to produce a film identical to that of Example 1F with the exception that the coating solution contained 9.6% w/w total solids (the components of the coating solution being present in the same relative amounts as those in Example 1F) and the coating was dried in two stages, the first at 125°C for 6 seconds and the second at about 85°C for 5 seconds. The coating was cured in the same way as in Example 1F.

The cured coating was then coated with a low surface energy supercoat consisting of a 0.05%w/v formulation of Carnauba wax (available from Hopkin and Williams) in "Genklene" (1,1,1-trichloroethane available from ICI) by a "bead" (meniscus) technique to give a wet coat weight of $13 \text{gm}^{-2}$. The supercoat was then dried at 80°C for 18 seconds.

The film produced possessed surface roughness (Ra 0.66$\mu$m and Rsm 180$\mu$m) and a static coefficient of friction of 0.31. The surface energy of the film was determined according to ASTM D 2578-67 as being less than 36 dyne $\text{cm}^{-1}$.

Example 5 (Comparative)

The procedure of Example 1 was repeated with an identical substrate and receptive layers but the textured surface layer was derived from a coating of the following composition and contained a conventional filler (silica). The coating composition was formed by dispersing Aerosil R972 into a mill base formulation by bead milling for 40 mins.

The mill base formulation comprised:

| Component | %w/w |
|---|---|
| Ebecryl 5129 | 29.93 |
| Isopropyl alcohol | 29.93 |
| Methanol | 29.93 |
| Aerosil R972 | 9.99 |
| Isocetyl stearate | 0.23 |

The mill base was slowly diluted with solvent plus photoinitiators to give a coating composition comprising:

EP 0 519 629 A1

| Component | %w/w |
|---|---|
| Ebecryl 5129* | 10.0 |
| Aerosil R972 | 1.0 |
| Isocetyl stearate | 0.02 |
| Irgacure 907 | 0.4 |
| Uvecryl P115* | 0.4 |
| Isopropyl alcohol | 3.0 |
| Acetone | 61.83 |
| Methanol | 19.25 |
| Diacetone alcohol | 4.1 |

Ebecryl 5129 (UCB) is a hexafunctional aliphatic urethaneacrylate; Aerosil R972 (DeGussa) is a hydrophobic surface treated silica, average primary particle size - 16 nm and BET surface area - $110 \pm 20$ m$^2$/g; Uvecryl P115 (UCB) is an aminoacrylate co-initiator.

The applied wet coat was approximately 12 microns thick and was dried in an oven at 80°C for 40 seconds. The dried coating was cured by one pass of the film at 10 metres/min under a pair of focused 118 W/cm (300 W/inch) UV lamps (microwave generated type H bulb Fusion Systems) in a nitrogen purged atmosphere.

Example 6 (Comparative)

This is a comparative Example not according to the invention. The surface texture of the film produced in this Example was provided by a conventional mineral filler (alumina hydrate) and was not due to the acrylate monomer to any significant extent. The avoidance of the monomer forming surface texture was due to the incorporation of a relatively high boiling solvent (diacetone alcohol) in the coating composition.

The procedure of Example 1 was repeated with identical substrate and receptive layers and the coating composition comprised ;

| | |
|---|---|
| Ebecryl 600 | 7.06 % w/w |
| (a difunctional epoxy acrylate oligomer | |
| supplied by UCB) | |
| | |
| Alumina hydrate | 0.05 % w/w |
| | |
| Irgacure 907 | 0.28 % w/w |
| | |
| Quantacure ITX | 0.14 % w/w |
| (a mixture of 2-isopropyl and 4-isopropyl thioxanthones | |
| supplied by International Bio Synthetics (IBS)) | |
| | |
| Quantacure EPD | 0.14 % w/w |
| (ethyl 4-(dimethylamino)benzoate | |
| supplied by IBS) | |
| | |
| Uvecryl P115 | 0.28 % w/w |
| (an amino acrylate supplied by UCB) | |
| | |
| Cellulose acetate | 0.024% w/w |
| | |
| Diethyl orthophthalate | 0.024% w/w |
| | |
| Acetone | 69.0 % w/w |
| | |
| Methanol | 18.4 % w/w |
| | |
| Diacetone alcohol | 4.6 % w/w |

The coating, drying and curing conditions were the same as in Example 1. The film was treated on the uncoated side using the same procedure as that used to treat the uncoated side of the film produced in Example 2.

Example 7

The procedure of Example 1 was repeated, with the substrate and receptive layers providing a film thickness of 75 microns, with a dry coat weight of approximately 0.3 mg/dm but the textured surface was derived from the coating compositions specified below. Four films were formed. To form the first film, a 5% coating solution (Composition 7A) was applied to the film to give a wet coat thickness of 12 μm, and to form the second to fourth films, a 10 % coating solution (Composition 7B) was applied to the film to give a wet coat thickness of 6 μm, 12 μm and 24 μm for the second to fourth films respectively. The coating solutions were coated on the receptive layer by hand using a Meier bar, and comprised:

15

|  | Composition 7A | Composition 7B |
|---|---|---|
| Plex 6696-0 | 5.0 % w/w | 10.0 % w/w |
| Irgacure 907 | 0.35 % w/w | 0.7 % w/w |
| Methanol | 94.65 % w/w | 89.3 % w/w |

The applied wet coating in each case was dried in an oven at 80°C for 30 seconds. The dried coatings were cured by one pass of the film at 2 metres per minute (mpm) under a focused 80 W/cm medium pressure mercury arc lamp (Primarc 'Mini-cure' unit) in air.

The coating properties of the cured films were assessed and the results are given in Table 3.

### TABLE 3

| Example | Adhesion | Surface Roughness | |
|---|---|---|---|
| | | Ra($\mu$m) | Rsm($\mu$m) |
| 7A | 0/8 | 0.13 | 30 |
| 7B(6) | 0/8 | 0.06 | 200 |
| 7B(12) | 0/8 | 0.36 | 266 |
| 7B(24) | 0/8 | 1.05 | 500 |

The figures in brackets after Examples 7B indicate the wet coat thicknesses of the three films to which composition 7B was applied. These examples demostrate that the surface textured coatings disclosed herein allow desriable surface roughness characteristics to be obtained while securing acceptable adhesion of the backcoat to the substrate.

Adhesion was assessed by: I) scoring through the coatings a cross hatch pattern consisting of 9 squares within a 2 x 2 cm area using the edge of a scalpel, II) adhering firmly Tesa tape 4104 over the test area, III) sharply removing the tape, IV) assessing the amount of coating removed by the number of non-intact squares, and V) repeating stages II)-IV) a further seven times. Adhesion is expressed as the number of squares removed over the number of tape pulls eg 0/8 = no coating removed after 8 tape pulls.

### Example 8

Film 1C produced in Example 1 and the film produced in Example 6 (comparative) were evaluated as optical data storage tape media.

A sample of the two films was slit into 35mm tapes and the treated films 1C and 6 (comparative) were spliced together to form a composite tape.

The composite tape was subjected to 10000 reeling cycles at 500m/min under a tension of 6 Newtons and then visually inspected for wear and damage to the aluminium alloy-dye/binder-overcoat surface.

### Results

The overcoat of the film produced in Example 6 (comparative) exhibited a large number of scratches and scuffing damage.

The overcoat of film 1C showed no signs of significant wear or damage thus demonstrating that a surface textured film of the invention provides significant improvement as regards resistance to wear and damage as compared with a conventionally coated film of the prior art.

### Example 9

The films obtained in Example 1F(thin), Example 2 and Example 5 (comparative) (which was treated on the uncoated side of the film to provide an identical coating to that of 1F(thin) and 2) were evaluated as optical data storage media. (The film of Example 5 so prepared was found to have a surface roughness of 0.09 (Ra) and friction coefficients of 0.58 ($f_{stat}$) and 0.41 ($f_{dyn}$)).

The films were slit into 35 mm tapes and their wear characteristics were assessed by subjecting the tapes to multiple cycling in which a portion of the tape written with data by means of a laser was wound back and forth between two spools at a speed of 3 m/s using the transport mechanism of a Creo Products 1003 Optical Tape Recorder. Wear damage was determined by measuring the bit error rate (BER) of the tapes at intervals during the cycling procedure. The BER provides a measure of the ratio of damaged data bits to the number of initially written data bits.

The results of this test are indicated in Table 4 and by the graph of Figure 2. The testing on the film of Example 5 (comparative) was discontinued after 10000 cycles in view of the high BER reached at that stage.

The initial value for Example 2 is significantly lower than that for Examples 1F(thin) and 5 due to the subbing layer providing an optically smooth surface onto which the aluminium layer was sputtered.

TABLE 4

| Cycles | BER/$10^{-4}$ | | |
|---|---|---|---|
| | Example 1F (thin) | Example 2 | Example 5 (Comparative) |
| 0 | 6.04 | 0.081 | 6.86 |
| 100 | - | 0.149 | 8.54 |
| 200 | - | 0.176 | 9.47 |
| 300 | - | 0.200 | 10.4 |
| 400 | - | 0.231 | 11.4 |
| 500 | 6.17 | 0.256 | 11.8 |
| 600 | - | 0.272 | 12.3 |
| 700 | - | 0.291 | 12.8 |
| 800 | - | 0.310 | 13.6 |
| 1000 | 6.18 | 0.334 | 14.4 |
| 1500 | 6.14 | 0.401 | 15.8 |
| 2000 | 6.27 | 0.449 | 16.5 |
| 2500 | 6.19 | 0.505 | 17.6 |
| 3000 | 6.17 | 0.546 | 18.5 |
| 3500 | 6.05 | 0.592 | 19.0 |
| 4000 | 6.05 | 0.635 | 19.6 |
| 4500 | 6.19 | 0.691 | 19.8 |
| 5000 | 6.19 | 0.745 | 20.3 |
| 5500 | 6.22 | 0.814 | 20.6 |
| 6000 | 6.08 | 0.865 | 21.1 |
| 6500 | 6.32 | 0.923 | 21.5 |
| 7000 | 6.20 | 0.988 | 21.8 |
| 7500 | 6.28 | 1.04 | 22.1 |
| 8000 | 6.35 | 1.11 | 22.5 |
| 8500 | 6.10 | 1.17 | 22.9 |
| 9000 | 6.30 | 1.23 | 23.6 |
| 9500 | 6.24 | 1.28 | 24.0 |
| 10000 | 6.27 | 1.32 | 24.4 |
| 20000 | 6.41 | 2.67 | - |
| 30000 | 6.61 | 3.80(at 28000) | - |
| 40000 | 6.67 | | - |
| 50000 | 6.50 | | - |
| 60000 | 6.84 | | - |

18

## Claims

1. A recording medium comprising a polymeric substrate, a recording layer on one side of the substrate and a surface textured backcoat layer on the opposite side of the substrate, the backcoat layer comprising a layer of cured material comprising at least one polymer wherein the surface texture is imparted primarily by the polymer or polymers per se and wherein the substrate is not oriented after the coating is formed.

2. A recording medium comprising a polymeric substrate having a recording layer on one side of the substrate and a surface textured coating on the other side of the substrate, said coating comprising a cured material comprising at least one polymer wherein the surface texture is imparted primarily by the polymer or polymers per se and the medium has an average surface roughness (Ra) of at least 0.05 μm.

3. A recording medium comprising a polymeric substrate, a recording layer on one side of the substrate and a backcoat layer on the opposite side of the substrate, the backcoat layer comprising a layer of cured material comprising at least one polymerised component and having a surface texture induced at least in part as a result of evaporation of a volatile vehicle from a coating composition containing said vehicle and the unpolymerised component(s).

4. A recording medium comprising a polymeric substrate having a recording layer on one side of the substrate and a surface textured coating on the other side of the substrate, said coating comprising a cured material comprising at least one multi-functional (meth)acrylate ester polymer wherein the surface texture is imparted primarily by the polymer or polymers per se.

5. A medium according to claim 4 in which the multifunctional (meth)acrylate ester polymer is present in an amount of at least 1% by weight based on the cured components in the coating.

6. A medium according to claim 4 or 5 in which at least 10% of the available (meth)acrylate double bonds present in the uncured coating are converted to single bonds by the curing the coating.

7. A medium according to any preceding claim in which the polymer or polymerised component of the surface textured coating comprises a metal (meth)acrylate.

8. A medium according to any of claims 1 to 3 in which the polymer or polymerised component of the surface textured coating comprises a (meth)acrylate polymer.

9. A medium according to any preceding claim further comprising a supercoat on the surface textured coating, the supercoat having a low surface energy.

10. A method of making a recording medium comprising coating a polymeric substrate with a solution or dispersion of material in a volatile liquid vehicle, drying the coating to remove the volatile vehicle, the material comprising at least one polymerisable component such that the drying process is effective to impart a surface texture to the dried layer formed by the coating of material, and curing the dried layer.

Fig.1

Fig.2

Ex 5 (COMPARATIVE)

Ex 1F

Ex 2

No. OF CYCLES ⟶

BER ( x $10^{-4}$ )

European Patent Office

**EUROPEAN SEARCH REPORT**

Application Number

EP 92 30 5216

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | GB-A-2 113 117 (TEIJIN LTD.)<br>* page 4, line 29 - line 38; claims 1-24; example 1 * | 1-10 | G11B5/70<br>G11B7/24 |
| A | DE-A-2 807 147 (TEIJIN LTD.)<br>* page 6, line 1 - page 7, line 2; claims 1-7 * | 1-10 | |
| A | DATABASE WPI<br>Week 9109,<br>Derwent Publications Ltd., London, GB;<br>AN 91-062506 (09)<br>& JP-A-3 012 026 (HITACHI MAXELL) 21 January 1991<br>* abstract * | 1-10 | |
| A | DATABASE WPI<br>Week 8131,<br>Derwent Publications Ltd., London, GB;<br>AN 81-55696 D (31)<br>& JP-A-56 010 455 (TORAY IND., INC.) 2 February 1981<br>* abstract * | 1-10 | TECHNICAL FIELDS SEARCHED (Int. Cl.5)<br><br>G11B<br>G03G |

The present search report has been drawn up for all claims

| Place of search | Date of completion of the search | Examiner |
|---|---|---|
| THE HAGUE | 25 SEPTEMBER 1992 | HINDIAS E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document